# EUROPÄISCHE PATENTSCHRIFT

(11) **EP 1 961 985 B1**
(45) Veröffentlichungstag und Bekanntmachung des Hinweises auf die Patenterteilung: **14.09.2011**
(21) Anmeldenummer: 08001397.2
(22) Anmeldetag: 25.01.2008
(51) Int. Cl.: F16D 25/08, F16D 25/12

(54) **Nehmerzylinder mit Wegmesseinrichtung**
Slave cylinder with position sensor
Cylindre récepteur doté d'un dispositif de mesure de trajectoire

(30) Priorität: 23.02.2007 DE 102007008978
(43) Veröffentlichungstag der Anmeldung: 27.08.2008
(73) Patentinhaber: Schaeffler Technologies GmbH & Co. KG, 91074 Herzogenaurach (DE)
(72) Erfinder: Frietsch, Frank, 77886 Lauf (DE)

(56) Entgegenhaltungen:
- EP-A2- 1 391 615
- DE-A1- 10 242 841
- DE-A1- 10 349 174
- DE-U1-202006 014 024

## Beschreibung

Die Erfindung betrifft einen Nehmerzylinder mit Wegmesseinrichtung für eine Fahrzeugkupplung gemäß dem Oberbegriff des Anspruchs 1.

Aus dem Stand der Technik ist mit der DE 102 42 841 A1 ein Nehmerzylinder mit einer Wegmesseinrichtung bekannt, mit dem die axiale Position des Kolbens im Nehmerzylinder im Verlauf seiner Verschiebung bestimmbar ist. Dazu ist der Kolben mit einem Kragen verbunden, der einen radial nach außen sich erstreckenden Trägerarm umfasst, der am radialen Ende einen Magneten trägt. Dieser Magnet ist in Form eines Einsatzes ausgeführt. Diesem Magneten bzw. Magnetgeber ist zur Bestimmung der Position des Kolbens des Nehmerzylinders außerhalb des Gehäuse des Nehmerzylinders ein Sensor lagepositioniert zugeordnet.

Die Aufgabe der Erfindung besteht darin, eine Einrichtung zur Wegmessung bzw. Positionsbestimmung des Kolbens eines Nehmerzylinders vorzuschlagen, die vor Staub und äußeren Beanspruchungen geschützt und kostengünstig herstellbar ist.

Diese Aufgabe wird mit den Merkmalen des Anspruchs 1 gelöst.

Danach wird der bereits zwischen Schmutzhülse und Kolben angeordnete Haltering des Nehmerzylinders verwendet, um an diesem mindestens einen Magneten zu befestigen, der zu einem außerhalb der Schmutzhülse angeordneten Sensor lagepositioniert zugeordnet ist, wobei der Magnet innerhalb der Schmutzhülse am Haltering angeordnet ist.

Durch die Integration mindestens einer Aufnahme für einen Magneten in den Haltering wird ein Teil der Messeinrichtung in das Gehäuse des Nehmerzylinders gelegt. Dadurch wird einerseits der vorhandene Bauraum im Innern des Nehmerzylinders ausgenutzt, andererseits befindet sich der Magnet innerhalb der Schmutzhülse des Nehmerzylinders, wodurch der Magnet nicht verschmutzt wird und sich auch keine Metallspäne durch Abrieb an den bewegenden Teilen aufsammeln können. Somit wird auch die Lebensdauer des Sensors erhöht, da an diesem kein Verschleiß auftritt. Weiterhin ist durch diese konstruktive Ausbildung eine berührungsfreie Weg- bzw. Positionsmessung möglich. Weiterhin werden durch diese Messeinrichtung die Kräfte am Nehmerzylinder nicht beeinflusst. Um eine Ausfallsicherung zu gewährleisten, ist es vorteilhaft, zwei Magnete in den Haltering zu integrieren, die zu zwei am Gehäuse entsprechend lagepositionierten Sensoren in Kontakt stehen.

Allerdings können auch in vorteilhafter Ausgestaltung der erfindungsgemäßen Lösung die Magnete anstelle am Haltering mittels einer entsprechenden Aufnahme bzw. Befestigungseinrichtung direkt am Kolben zu befestigt werden.

Weiterhin besteht die Möglichkeit, die Aufnahme für die Magnete in den Kolben zu integrieren, so dass Befestigung und Kolben ein Teil bilden. Dazu ist es besonders kostengünstig, dieses Teil aus Kunststoff herzustellen.

Bei der Befestigung der Magnete am Haltering weist dieser in axialer Richtung mindestens zwei Verlängerungen auf, die jeweils als Aufnahme für einen Magneten ausgestaltet sind.

In vorteilhafter Weise der erfindungsgemäßen Lösung wird diese Aufnahme aus drei Seitenwänden zur Umhüllung des Magneten gebildet, wobei sich der Magnet in axialer Richtung auf einer radial nach außen weisenden Bodenfläche im Haltering abstützen kann. Diese Seitenwände werden bei der Herstellung des aus Kunststoff gebildeten Halterings kostengünstig gleich mit bei der Herstellung angespritzt.

Zur Bildung einer Verliersicherung für den Magneten sowohl in radialer als auch in axialer Richtung sind mindestens zwei im Winkel zueinander stehende Seitenwände endseitig mit jeweils mindestens einem Rasthaken versehen. Somit verrastet jeweils ein Magnet über diese so gebildete Schnappverbindung am Haltering. Bei weiteren vorteilhaften Ausgestaltungen der Erfindung kann der am Umfang des Halterings angeordnete Magnet von dessen Material umspritzt werden. Eine weitere kostengünstige Variante der Ausgestaltung der erfindungsgemäßen Lösung ist die, dass der Magnet in den Umfang des Halterings eingeklebt bzw. auf den Umfang des Halterings aufgeklebt wird.

Weitere Vorteile und vorteilhafte Weiterbildungen der Erfindung sind Gegenstand der nachfolgenden Figuren sowie deren Beschreibungsteile.

Es zeigen:
- Figur 1: eine Schnittdarstellung eines erfindungsgemäßen Nehmerzylinders,
- Figur 2: eine räumliche Darstellung des Nehmerzylinders gemäß Figur 1,
- Figur 3: eine räumliche Darstellung eines erfindungsgemäßen Halterings.

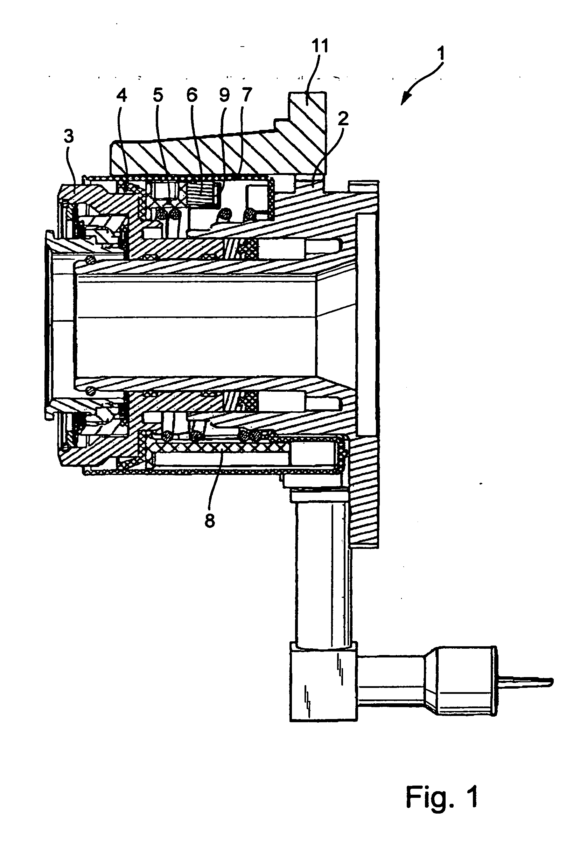

Figur 1 zeigt den Aufbau eines erfindungsgemäßen Nehmerzylinders 1 in einer Schnittdarstellung. Dieser besteht aus einem Gehäuse 2, in dem ein Kolben 3 axial bewegbar gelagert ist. Endseitig dieses Kolbens ist ein Abstreifring 4 zum Abstreifen von Schmutz vorgesehen, an den sich ein Haltering 5 anschließt, der zur Fixierung dieses Abstreifringes 4 und als Verdrehsicherung des Kolbens 3 dient. Diese Bauteile werden von einer Schmutzhülse 7 umhüllt, die das Eindringen von Schmutz in die beweglichen Bauteile verhindert. Die Verdrehsicherung für den Kolben wird durch die am Haltering 5 als Verdrehsicherung 8 ausgebildete Verlängerung realisiert. Weiterhin ist aus dieser Figur 1 erkennbar, dass an den Haltering 5 eine Aufnahme 9 zur Befestigung eines Magneten 6 angebracht ist. Zu diesem Magneten 6 ist lagepositioniert am Gehäuse 2 ein Sensor 11 angeordnet. Zur Gewährleistung einer Ausfallsicherung stehen vorzugsweise immer zwei Magnete 6 mit zwei Sensoren 11 in Kontakt.

Durch die Anbindung des Halterings 5 an den Kolben 3 legt somit der Magnet 6 bei einer Bewegung des Kolbens einen Hub als Wegänderung zurück. Durch den mit dem Magnet 6 in Kontakt stehenden Sensor 11 kann dieser den Weg des Kolbens 3 berührungslos durch die Schmutzhülse 7 hindurch messen, so dass die jeweils aktuelle Position des Kolbens 3 bestimmt werden kann.

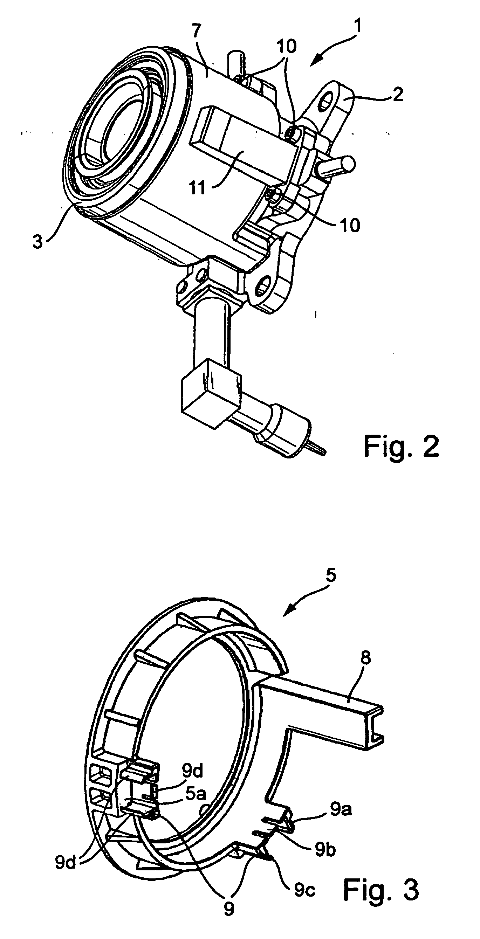

Figur 2 zeigt diesen Nehmerzylinder aus Figur 1 in einer räumlichen Darstellung. Aus dieser ist die Anbindung der Sensoren an das Gehäuse 2 erkennbar. Über Befestigungselemente 10 werden die Sensoren 11 am Gehäuse 2 befestigt. Die Schmutzhülse 7 dient als Abdeckung für den im Gehäuse 2 bewegbaren Kolben 3.

Die Figur 3 zeigt den erfindungsgemäßen Haltering 5 in einer perspektivischen Darstellung. Aus dieser sind die Aufnahmen 9 für die Magnete 6 sowie die Ausbildung der Verdrehsicherung 8 für den Kolben 3 ersichtlich, die an den aus Kunststoff hergestellten Haltering 5 während des Spritzgießprozesses mit angespritzt sind. So wird die Aufnahme 9 aus den drei Seitenwänden 9a, 9b und 9c gebildet, wobei die Höhe einer Seitenwand 9a, 9b, 9c eine Verlängerung des Halterings 5 in axialer Richtung darstellt. Diese Aufnahmen 9 sind an entsprechend verstärkten Stellen des Halterings vorgesehen. Diese Verstärkungen bilden zu den Seitenwänden 9a bis 9c eine Bodenfläche 5a. Zur Lagefixierung des Magneten 6 sind in axialer Richtung die Seitenwände 9b mit einem Rasthaken versehen und die Seitenwände 9a und 9c in radialer Richtung mit Rasthaken 9d versehen.

Durch die am Haltering 5 angebrachte Verdrehsicherung 8 und die ortsfeste Verschraubung der Sensoren 11 direkt am Gehäuse 2 des Nehmerzylinders 1 ist die radiale Position der Magnete 6 zu den Sensoren 11 stets gewährleistet, so dass immer eine Messung erfolgen kann.

### Bezugszeichenliste

- 1: Nehmerzylinder
- 2: Gehäuse
- 3: Kolben
- 4: Abstreifring
- 5: Haltering
- 5a: Bodenfläche
- 6: Magnet
- 7: Schmutzhülse
- 8: Verdrehsicherung
- 9: Aufnahme für Magnet
- 9a: Seitenwand
- 9b: Seitenwand
- 9c: Seitenwand
- 9d: Rasthaken
- 10: Befestigung
- 11: Sensor

## Patentansprüche

1. Nehmerzylinder (1) einer Ausrückeinrichtung für eine Fahrzeugkupplung mit einer aus mindestens einem Magneten (6) und mindestens einem mit diesem in Wirkverbindung stehenden Sensor (11) gebildeten Einrichtung zur Wegmessung und Positionsbestimmung eines Kolbens (3), der in einem von einer Schmutzhülse (7) abgedeckten zylindrischen Gehäuse (2) axial bewegbar gelagert und von einem Haltering (5) umgeben ist, wobei der Sensor (11) am Gehäuse (2) angebracht ist und jeweils einem Sensor (11) ein am Haltering (5) befestigter Magnet (6) lagepositioniert zugeordnet ist, **dadurch gekennzeichnet, dass** der Magnet (6) innerhalb der Schmutzhülse (7) am Haltering (5) angeordnet ist.

2. Nehmerzylinder (1) nach Anspruch 1, **dadurch gekennzeichnet, dass** am Kolben (3) eine Befestigung für die Magnete (6) vorgesehen ist.

3. Nehmerzylinder (1) nach Anspruch 1, **dadurch gekennzeichnet, dass** der Kolben (3) und die Befestigung für die Magnete (6) einteilig ausgeführt sind.

4. Nehmerzylinder (1) nach Anspruch 3, **dadurch gekennzeichnet, dass** der Kolben (3) mit der Befestigung für die Magnete (6) aus Kunststoff hergestellt ist.

5. Nehmerzylinder (1) nach Anspruch 1, **dadurch gekennzeichnet, dass** der Haltering (5) mit mindestens einer als Aufnahme (9) für einen Magneten (6) gestalteten axialen Verlängerung versehen ist.

6. Nehmerzylinder (1) nach Anspruch 5, **dadurch gekennzeichnet, dass** diese Aufnahme (9) aus drei Seitenwänden (9a, 9b, 9c) zur Umhüllung des Magneten (6) gebildet wird, wobei sich der Magnet (6) in axialer Richtung auf einer radial nach außen weisenden Bodenfläche (5a) im Haltering (5) abstützt.

7. Nehmerzylinder (1) nach Anspruch 6, **dadurch gekennzeichnet, dass** mindestens die Seitenwand (9b) endseitig mit mindestens einem Rasthaken (9d) versehen ist und an den Seitenwänden (9a) und (9c) in radialer Richtung jeweils Rasthaken (9d) angebracht sind.

8. Nehmerzylinder (1) nach Anspruch 1, **dadurch gekennzeichnet, dass** der am Umfang des Halterings (5) angeordnete Magnet (6) von dessen Material umspritzt wird.

9. Nehmerzylinder (1) nach Anspruch 1, **dadurch gekennzeichnet, dass** der Magnet (6) in den Umfang des Halterings (5) eingeklebt wird.

10. Nehmerzylinder (1) nach Anspruch 1, **dadurch gekennzeichnet, dass** der Magnet (6) auf den Umfang des Halterings (5) aufgeklebt wird.

## Claims

1. Slave cylinder (1) of a clutch release system for a vehicle clutch having a device which is formed from at least one magnet (6) and at least one sensor (11) which is operatively connected thereto, and which has the purpose of measuring travel and determining the position of a piston (3) which is mounted in an axially movable fashion in a cylindrical housing (2) which is covered by a dirt sleeve (7), and is surrounded by a securing ring (5), wherein the sensor (11) is attached to the housing (2), and a magnet (6) which is attached to the securing ring (5) is assigned in each case to a sensor (11) in a positioned fashion, **characterized in that** the magnet (6) is arranged within the protective sleeve (7) on the securing ring (5).

2. Slave cylinder (1) according to Claim 1, **characterized in that** an attachment for the magnets (6) is provided on the piston (3).

3. Slave cylinder (1) according to Claim 1, **characterized in that** the piston (3) and the attachment for the magnets (6) are embodied in one piece.

4. Slave cylinder (1) according to Claim 3, **characterized in that** the piston (3) with the attachment for the magnets (6) is manufactured from plastic.

5. Slave cylinder (1) according to Claim 1, **characterized in that** the securing ring (5) is provided with at least one axial extension which is configured as a receptacle (9) for a magnet (6).

6. Slave cylinder (1) according to Claim 5, **characterized in that** this receptacle (9) is formed from three side walls (9a, 9b, 9c) for surrounding the magnet (6), wherein the magnet (6) is supported in the axial direction on a radially outwardly facing floor surface (5a) in the securing ring (5).

7. Slave cylinder (1) according to Claim 6, **characterized in that** at least the side wall (9b) is provided on the end side with at least one latching hook (9d), and latching hooks (9d) are attached to each of the side walls (9a) and (9c) in the radial direction.

8. Slave cylinder (1) according to Claim 1, **characterized in that** the magnet (6) which is arranged on the circumference of the securing ring (5) is encapsulated by injection moulding by the material of said securing ring (5).

9. Slave cylinder (1) according to Claim 1, **characterized in that** the magnet (6) is bonded into the circumference of the securing ring (5).

10. Slave cylinder (1) according to Claim 1, **characterized in that** the magnet (6) is bonded onto the circumference of the securing ring (5).

## Revendications

1. Cylindre récepteur (1) d'un système de débrayage pour un embrayage de véhicule comprenant un système de mesure de trajectoire et de détermination de position d'un piston (3) formé d'au moins un aimant (6) et d'au moins un capteur (11) en liaison fonctionnelle avec celui-ci, qui est monté mobile axialement dans un boîtier de cylindre (2) recouvert par un manchon anti-salissures (7) et qui est entouré par une bague de retenue (5), le capteur (11) étant monté sur le boîtier (2) et un aimant (6) fixé sur la bague de retenue (5) étant associé en position à chaque fois à un capteur (11), **caractérisé en ce que** l'aimant (6) est disposé à l'intérieur du manchon anti-salissures (7) sur la bague de retenue (5).

2. Cylindre récepteur (1) selon la revendication 1, **caractérisé en ce qu'**une fixation pour les aimants (6) est prévue sur le piston (3).

3. Cylindre récepteur (1) selon la revendication 1, **caractérisé en ce que** le piston (3) et la fixation pour les aimants (6) sont réalisés d'une seule pièce.

4. Cylindre récepteur (1) selon la revendication 3, **caractérisé en ce que** le piston (3) ainsi que la fixation pour les aimants (6) sont fabriqués en plastique.

5. Cylindre récepteur (1) selon la revendication 1, **caractérisé en ce que** la bague de retenue (5) est pourvue d'au moins un prolongement axial configuré sous forme de logement (9) pour un aimant (6).

6. Cylindre récepteur (1) selon la revendication 5, **caractérisé en ce que** ce logement (9) est formé de trois parois latérales (9a, 9b, 9c) pour envelopper l'aimant (6), l'aimant (6) s'appuyant dans la direction axiale sur une surface de fond (5a) tournée radialement vers l'extérieur dans la bague de retenue (5).

7. Cylindre récepteur (1) selon la revendication 6, **caractérisé en ce qu'**au moins la paroi latérale (9b) est pourvue du côté de son extrémité d'au moins un crochet d'encliquetage (9d) et **en ce que** des crochets d'encliquetage (9d) sont à chaque fois montés sur les parois latérales (9a) et (9c) dans la direction radiale.

8. Cylindre récepteur (1) selon la revendication 1, **caractérisé en ce que** l'aimant (6) disposé sur la périphérie de la bague de retenue (5) est surmoulé par le matériau de cette dernière.

9. Cylindre récepteur (1) selon la revendication 1, **caractérisé en ce que** l'aimant (6) est collé dans la périphérie de la bague de retenue (5).

10. Cylindre récepteur (1) selon la revendication 1, **caractérisé en ce que** l'aimant (6) est collé sur la périphérie de la bague de retenue (5).
